(19) Europäisches Patentamt
European Patent Office
Office européen des brevets

(11) **EP 2 549 470 A1**

(12) **EUROPEAN PATENT APPLICATION**
published in accordance with Art. 153(4) EPC

(43) Date of publication:
**23.01.2013 Bulletin 2013/04**

(51) Int Cl.:
**G09G 5/00** *(2006.01)* **G06F 3/048** *(2013.01)*

(21) Application number: **11756132.4**

(22) Date of filing: **08.03.2011**

(86) International application number:
**PCT/JP2011/055338**

(87) International publication number:
**WO 2011/114943 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2010 JP 2010057496**

(71) Applicant: **Sony Corporation
Tokyo 108-0075 (JP)**

(72) Inventor: **KATO, Shinya
Tokyo 108-0075 (JP)**

(74) Representative: **Ealey, Douglas Ralph et al
D Young & Co LLP
120 Holborn
London EC1N 2DY (GB)**

(54) **IMAGE DISPLAY APPARATUS, IMAGE DISPLAY CONTROL METHOD AND PROGRAM**

(57) Provided are an apparatus and a method that, in a configuration where a rotational movement of the apparatus causes switching of displayed data, effectively control display even when the apparatus has gone beyond a defined operating range. In a configuration where update processing of displayed data is executed on the basis of rotation angle information, detected by a sensor, of the apparatus, when the apparatus has rotated beyond an operating range already set up for the apparatus, a control unit changes the operating range. Specifically, an operating range is sequentially updated so that a current angle of an image display apparatus may be constantly set within the operating range. This processing for updating the operating range makes it possible to have the apparatus constantly set within an effective operating range, prevent occurrence of a problem that displayed data is set unchangeable because of the position of the apparatus, and constantly update displayed data.

*FIG. 10*

(1) INITIAL STATE

[θ min] LOWER LIMIT
TOWARD SCREEN 0°
OPERATING RANGE
[θ max] UPPER LIMIT
−90°
+90°

(2) UPDATED STATE

412 UPDATED UPPER LIMIT [θ max]
+90°
410 UPDATED OPERATING RANGE
0°
415 IMAGE OBSERVATION POSITION
v1
411 UPDATED LOWER LIMIT [θ min]
P: CURRENT ANGLE [θ cur]
−90°

EP 2 549 470 A1

**Description**

TECHNICAL FIELD

The present invention relates to an image display apparatus, an image display control method, and a program. Particularly, the present invention relates to an image display apparatus, an image display control method, and a program that change displayed information in accordance with a movement of a display unit.

BACKGROUND ART

Most portable devices, such as cameras, game machines and mobile terminals, of these days are provided with a display unit such as a liquid crystal display, and have a configuration that makes it possible to display on a display unit and observe, for example, an image photographed by a camera, or the like. In general, when changing an image displayed on the display unit of such a portable device, a user needs to provide a predetermined input through an input section such as a switch provided in the apparatus.

Patent Document 1 (Japanese Patent No. 3234633) is available as a conventional technology disclosing a configuration that changes a content displayed on a display unit without any user input provided via an input unit but with leaning and rotating of an apparatus provided with the display unit. Patent Document 1 here discloses the configuration that has a sensor contained in the apparatus provided with the display unit, determines the degrees of leaning of the apparatus and the like on the basis of information from the sensor, and changes information displayed on the display unit, the sensor being configured to measure the amount of movement and the amount of rotation of the apparatus.

Patent Document 1 shows, as a configuration for determining the state of the apparatus in terms of the degrees of leaning of the apparatus and the like, an example that uses an acceleration sensor and a motion analysis unit, or an angular velocity sensor and the motion analysis unit, in combination. Patent Document 1 also explains an embodiment configured to use multi-view images as images to be displayed and display, in accordance with the angle of rotation of the apparatus, an image viewed from a direction in which the apparatus has been rotated. That is, an image viewed from the left side to an image viewed from the right side is displayed on the display unit by rotating the apparatus around a vertical axis.

However, a conventional configuration such as the configuration described in Patent Document 1 here, i.e., a configuration that changes, by such means as rotating the apparatus around a vertical axis, a content displayed on the display unit has a problem in that while displayed data is updated as long as the apparatus is within a specific operating region, displayed data is not updated despite rotation of the apparatus when the apparatus is outside the operating region.

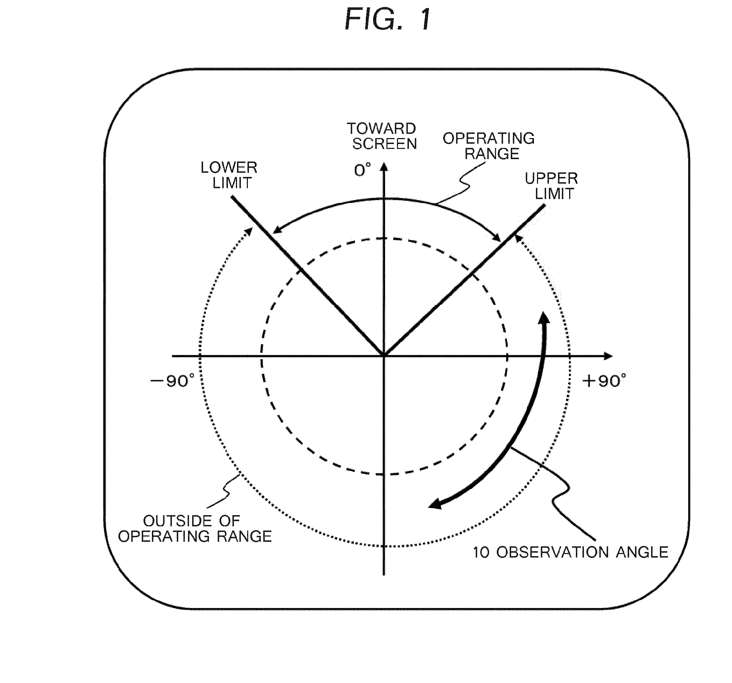

Specifically, for example, as shown in Fig. 1, in a case where a region from the upper limit (e.g., + 30 degrees) to the lower limit (e.g., - 30 degrees) is defined as an operating range, data displayed on the display unit is updated sequentially as the apparatus is rotated within an operating region (from the lower limit to the upper limit), whereas update of the displayed data is not executed when the apparatus is outside the operating region.

For example, when the apparatus has been rotated rightward and reached a region beyond the upper limit (e.g., + 30 degrees), displayed data corresponding to a region at the upper limit (+ 30 degrees) continues to be displayed. Whether the display apparatus is rotated rightward or leftward by a user while being inside an observation range 10 shown in Fig. 1, the observation range 10 stays in a region beyond the upper limit (e.g., + 30 degrees), whereby display of the displayed data corresponding to the region at the upper limit (+ 30 degrees) is continued. Otherwise, execution of update processing on the displayed data corresponding to the upper limit (+ 30 degrees) is continued, the update processing being, for example, page scrolling in a given direction or cursor moving processing.

In this state, it is necessary to perform processing for setting the current angle back to 0, for example, by performing an operation such as pressing down a reset button. Forcing a user to perform an operation such as pressing down a reset button extremely reduces the convenience of the apparatus. Additionally, placement of a reset button and the button are necessitated, with which there are problems of increasing the cost of the apparatus and becoming factors that preclude downsizing thereof.

Further, it is difficult for a user to determine whether or not the position of the apparatus is in the operating range. Consequently, when the apparatus is outside the operating range, execution of different processing is not allowed even by rotating the apparatus in a different direction, and this may sometimes cause the user to suspect that the apparatus may be out of order.

CITATION LIST

PATENT DOCUMENT

Patent Document 1: Japanese Patent No. 3234633

SUMMARY OF THE INVENTION

PROBLEMS TO BE SOLVED BY THE INVENTION

The present invention has been made in view of, for example, the above problems, and aims at providing an image display apparatus, an image display control method, and a program that, in a configuration where a displayed content on a display unit is changed by such means as rotation of the apparatus, update an operating region in accordance with a movement of the apparatus without fixing the operating range, and thereby make it possible to change displayed data or processing when the apparatus is at any position.

SOLUTIONS TO PROBLEMS

A first aspect of the present invention is an image display apparatus including: a sensor for detecting a rotation angle of the image display apparatus or information used for calculating the rotation angle; a control unit for executing update processing on displayed data on the basis of a current angle of the image display apparatus, the current angle being calculated on the basis of information input from the sensor; and a display unit for displaying displayed data that accords with the update processing executed by the control unit. The control unit is configured to, when an image processing apparatus is in a predetermined operating range, execute the update processing on the displayed data on the display unit in accordance with the rotation angle within the operating range. Further, when the image display apparatus has rotated beyond an already set-up operating range, the control unit changes the operating range along with the rotation, and performs operating-range update processing in which the current angle of the image display apparatus is set within an updated operating range.

Further, in one embodiment of the image display apparatus of the present invention, the control unit: executes, when the current angle of the image display apparatus has shifted in a direction that brings the current angle beyond the upper limit of the already set-up operating range, the operating-range update processing in a manner that the current angle is set as the upper limit of an operating range; and executes, when the current angle of the image display apparatus has shifted in a direction that brings the current angle beyond the lower limit of the already set-up operating range, the operating-range update processing in a manner that the current angle is set as the lower limit of the operating range.

Further, in one embodiment of the image display apparatus of the present invention, the sensor is an angular velocity sensor or an angular acceleration sensor, and the control unit calculates the current angle of the image display apparatus on the basis of sensor-detected information from the angular velocity sensor or the angular acceleration sensor or inputs a calculated value.

Further, in one embodiment of the image display apparatus of the present invention, the image display apparatus further includes an angle detection unit for calculating the current angle of the image display apparatus by executing integration calculation processing on values output from the angular velocity sensor or the angular acceleration sensor, and outputting the current angle to the control unit.

Further, in one embodiment of the image display apparatus of the present invention, the control unit executes, on the basis of the current angle of the image display apparatus, processing for switching multi-view images to be displayed on the display unit.

Further, a second aspect of the present invention is an image display control method to be executed in an image display apparatus. The image display control method includes: an apparatus position detection step in which a sensor detects a rotation angle of the image display apparatus or information used for calculating the rotation angle; a display update step in which a control unit executes update processing on displayed data on a display unit on the basis of a current angle of the image display apparatus, the current angle being calculated on the basis of information input from the sensor, and in which the update processing on the displayed data is executed when the image display apparatus is detected as having rotated within a predetermined operating range; a display step in which the display unit displays displayed data that accords with the update processing by the control unit; and an operating-range update step in which, when the image display apparatus has rotated beyond an already set-up operating range, the control unit changes the operating range along with the rotation, and performs operating-range update processing in which the current angle of the image display apparatus is set within the operating range

Further, a third aspect of the present invention is a program for causing an image display apparatus to execute image display control. The program is configured to execute: an apparatus position detection step of causing a sensor to detect a rotation angle of the image display apparatus or information used for calculating the rotation angle; a display update step of causing a control unit to execute update processing on displayed data on a display unit on the basis of a current angle of the image display apparatus, the current angle being calculated on the basis of information input from the sensor, and in which the update processing on the displayed data is executed when the image display apparatus is detected as having rotated within a predetermined operating range; a display step of causing the display unit to display displayed data that accords with the update processing by the control unit; and an operating-range update step in which, when the image display apparatus has rotated beyond an already set-up operating range, the control unit changes the operating range along with the rotation and sets the current angle of the image display apparatus within the operating range.

Note that the program of the present invention is, for example, a program that can be provided by a storage medium or a communication medium that provides various program codes in a computer-readable form to an information processing apparatus or a computer system that is capable of executing the program codes. Processing corresponding to such a program is implemented on an information processing apparatus or a computer system by providing the program thereto in a computer-readable form.

Still other objects, characteristics and advantages of the present invention will become apparent from detailed description based on a below-described embodiment of the present invention and the accompanying drawings. Note that, in this description, a system refers to a configuration obtained as a logical set of two or more apparatuses, and is not limited to one in which the apparatuses in each configuration are contained in the same chassis.

EFFECTS OF THE INVENTION

According to the configuration of one embodiment of the present invention, there are provided an apparatus and a method that, in a configuration where a rotational movement of the apparatus causes switching of displayed data, effectively control display even when the apparatus has gone beyond a defined operating range. In a configuration where update processing of displayed data is executed on the basis of rotation angle information, detected by a sensor, of the apparatus, when the apparatus has rotated beyond an operating range already set up for the apparatus, a control unit changes the operating range. Specifically, an operating range is sequentially updated so that a current angle of an image display apparatus may be constantly set within the operating range. This processing for updating the operating range makes it possible to have the apparatus constantly set within an effective operating range, prevent occurrence of a problem that displayed data is set unchangeable because of the position of the apparatus, and constantly update displayed data.

BRIEF DESCRIPTION OF DRAWINGS

Fig. 1 is a diagram explaining problems in a case where an operating range in display control using rotational movements of an apparatus is set unchangeable.
Fig. 2 is an illustration explaining the configurations of outer appearances of an image pickup apparatus presented as an example of an image display apparatus.
Fig. 3 is an illustration explaining an example of processing for taking multi-view images.
Fig. 4 is an illustration explaining processing for displaying multi-view images.
Fig. 5 is a diagram explaining an example of processing for updating an operating range, which is executed by an image display apparatus of the present invention.
Fig. 6 is a diagram explaining an example of the configuration of the image display apparatus of the present invention.
Fig. 7 is a diagram showing a flowchart explaining the sequence of processing executed by the image display apparatuses of the present invention.
Fig. 8 is a diagram illustrating an example of an initially set-up operating range.
Fig. 9 is a diagram illustrating the initially set-up operating range and various examples of setting of a current angle, which accompanies a movement of the apparatus.
Fig. 10 is a diagram explaining an example of the processing of updating an operating range.
Fig. 11 is a diagram explaining an example of the processing of updating an operating range.
Fig. 12 is a diagram explaining correspondence between the processing of updating an operating range and the processing of displaying multi-view images.

MODE FOR CARRYING OUT THE INVENTION

Hereinafter, details of an image display apparatus, an image display control method and a program of the present invention are explained with reference to the drawings. Note that the explanation is given in accordance with the following issues:

1. Regarding the outlines of the configuration of and processing by the image display apparatus; and

2. Regarding details of a configuration for display control in and processing for display control by the image display apparatus of present invention.

1. Regarding the outlines of the configuration of and processing by the image display apparatus

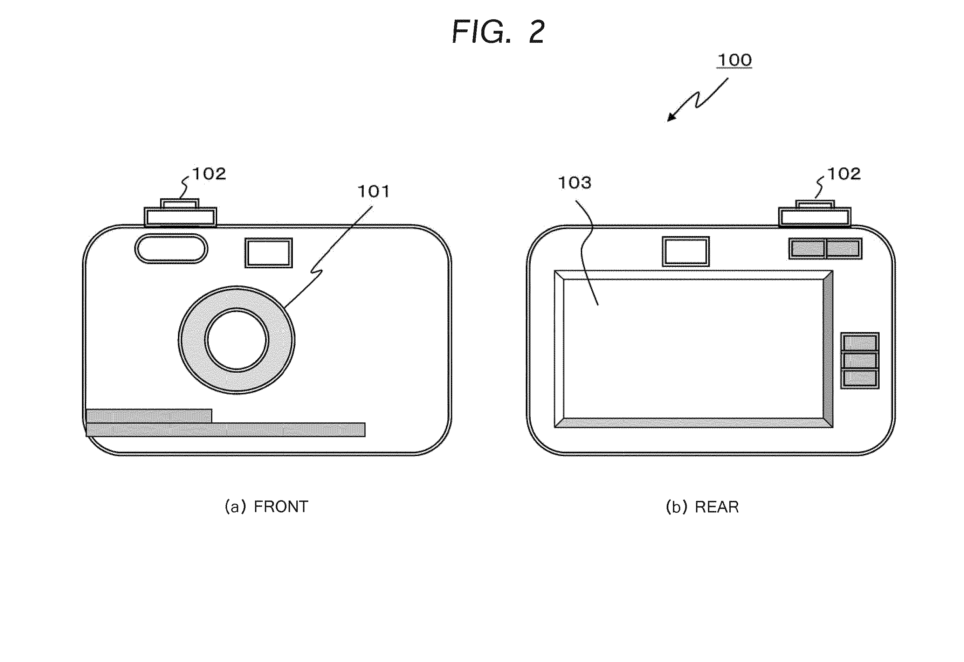

First, the outlines of the configuration of and processing by the image display apparatus of the present invention are explained. Fig. 2 shows an image pickup apparatus (camera) 100 presented as one example of the configuration of the image display apparatuses of the present invention. Note that the image display apparatus of the present invention may be any apparatus provided with a display unit, and examples thereof include a camera, a mobile phone, a game machine, a mobile PC and other various apparatuses provided with a display unit. The following embodiment explains, as one example, a case of an image pickup apparatus (camera).

In Fig. 2, (a) the front view and (b) the rear view are shown as outer appearances of the image pickup apparatus. As shown in (a) the front view, the image pickup apparatus 100 has a lens 101, and photographs an image when a shutter 102 is operated. As shown in (b) the rear view of Fig. 1, a display unit 103 used for processing of displaying a photographed image or as a user interface is provided on the rear of the image pickup apparatus 100. On the display unit 103, an image photographed by the image pickup apparatus, a guiding screen that includes a cursor for user operation, and the like are displayed.

The image display apparatus of the present invention is configured to execute operation on displayed data, such as an image or a cursor displayed on the display unit 103, by such means as rotation of the apparatus itself. That is, when a user holds the image pickup apparatus 100 in his or her hand and rotates the image pickup apparatus 100, switching images or moving a cursor or the like on the display unit is executed.

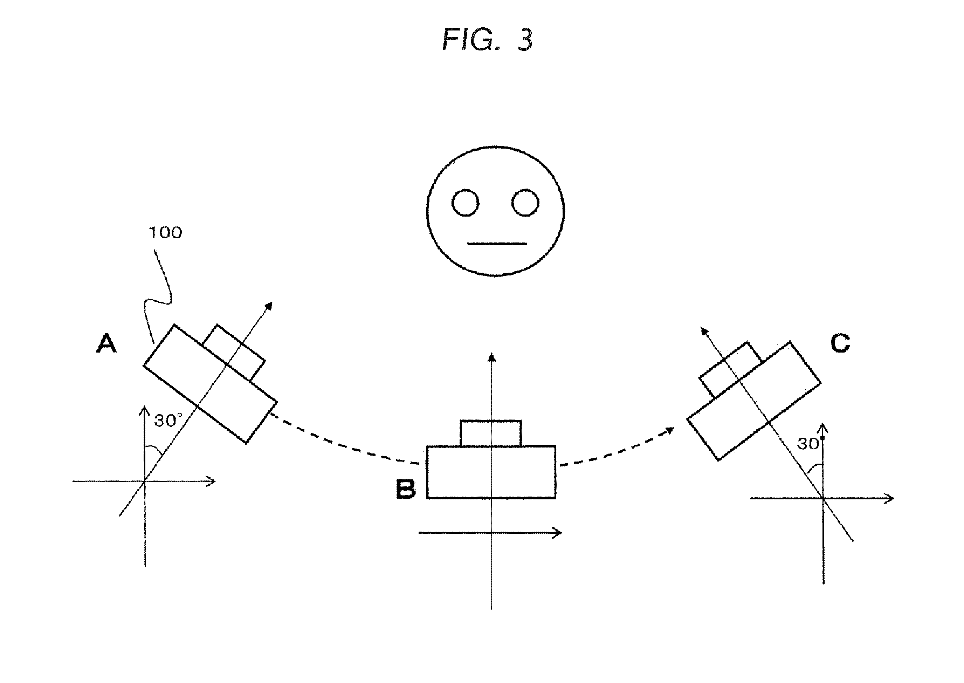

Hereinafter, explained as an example of update of displayed data is a case where processing for switching multi-view images is performed. For example, as shown in Fig. 3, multi-view images are photographed through consecutive photographing while the image pickup apparatus 100 is moved sequentially from a position A to a position B and then to a position C. For example, several tens of images are photographed consecutively.
The multiple images thus photographed are stored individually in a storage unit. Note that photographing-angle information is also recorded together in the storage unit as attribute information (metadata) corresponding to the respective images.

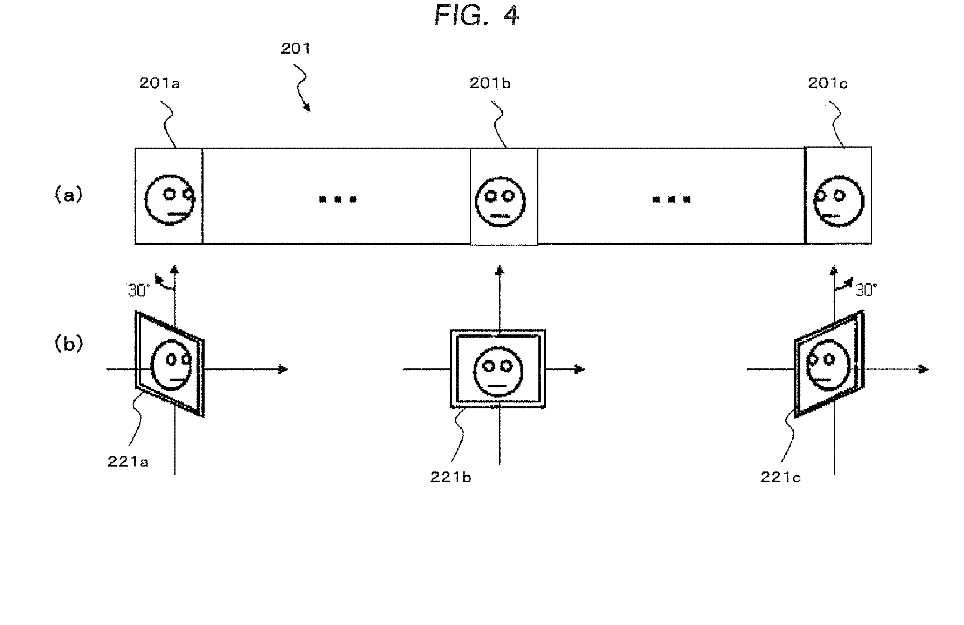

An example of a case when these multi-view images thus photographed are displayed on the display unit 103 shown in Fig. 2 is shown in Fig. 4. In Fig. 4, there is an illustration showing each of the following illustrations in a manner associating the following illustrations with each other:

(a) multiple recorded images; and
(b) examples of display processing

(a) The multiple recorded images represent a line of images photographed through the photographing processing described with reference to Fig. 3 and stored in the storage unit of the imaging pickup apparatus 100. In these images,
an image 201a is an image photographed at the position A shown in Fig. 3,
an image 201b is an image photographed at the position B shown in Fig. 3, and
an image 201c is an image photographed at the position C shown in Fig. 3.

As the examples of the display processing in Fig. 4(b), examples of images to be displayed on the display unit 103 shown in Fig. 2 are shown. For example, the user holds the image pickup apparatus 100 in his or her hand, and rotates the apparatus while watching the display unit 103. Along with the rotation, images to be displayed on the display unit 103 are sequentially switched and displayed, as shown in Fig. 4(b).

During such processing for updating displayed data, a problem occurs with the conventional apparatus as explained above with reference to Fig. 1, the problem being that, while update of images is executed within a predetermined operating range (from the lower limit to the upper limit), update of images is not executed in a region outside the operating range even when the apparatus has been rotated.

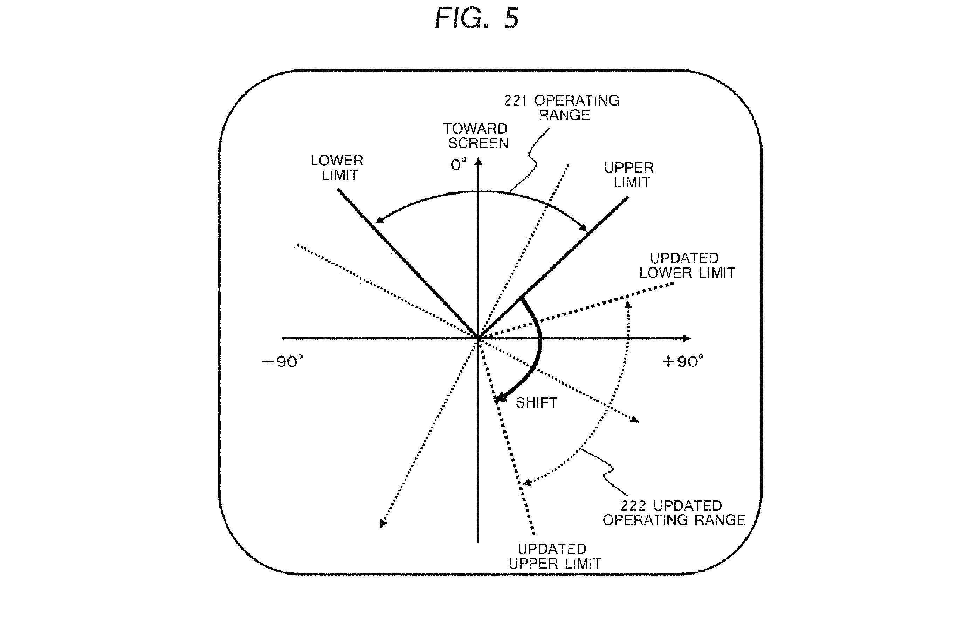

The image display apparatus of the present invention solves this problem.
Specifically, for example, in a configuration where an operating range 221 for which the upper limit and the lower limit have been set as shown in Fig. 5 is defined, when rotation of the apparatus by a user has caused rightward rotation thereof beyond the upper limit, the operating range from the upper limit to the lower limit is also rotated in response to the rotation by the user. Specifically, a change for setting the upper limit to a current angle is made. This processing sets up, for example, an updated operating range 222 shown in Fig. 5. Also, when leftward rotation thereof beyond the lower limit has been caused, a change for setting the lower limit to the current angle is made, so that the operating range is rotated in response to the rotation by the user. That is, a coordinate system itself is rotated, whereby a configuration that allows, no matter what position the apparatus is located at, the current position to be defined within the operating range is provided.

2. Regarding details of a configuration for display control in and display control processing by the image display apparatus of present invention

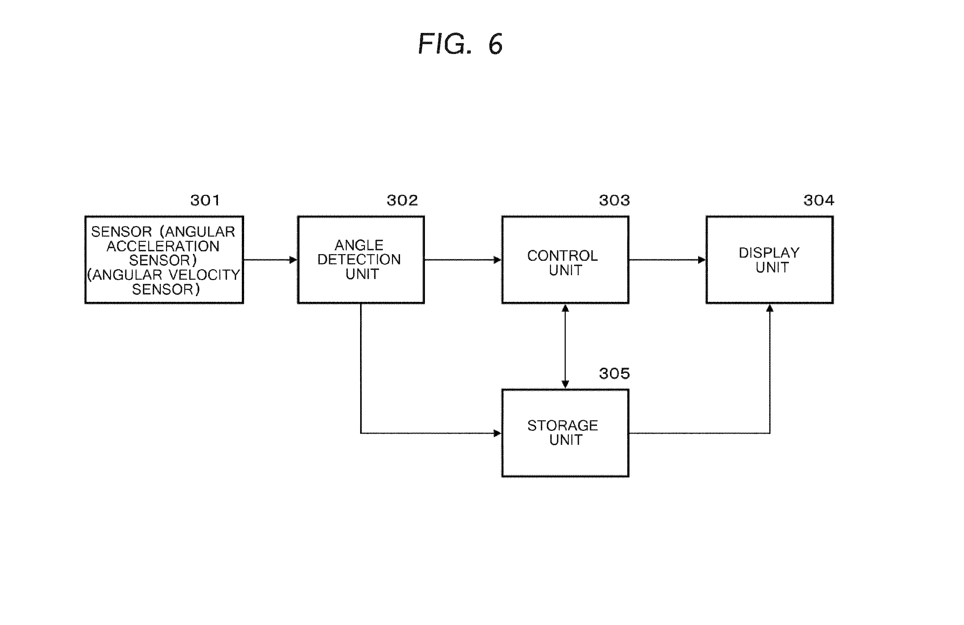

Next, details of a configuration for display control in and display control processing by the image display apparatus of present invention are explained with reference to Fig. 6 and the subsequent drawings.

Fig. 6 corresponds to the configuration of the image display apparatus of the present invention, and is a diagram extracting and showing a configuration therefrom that is needed for executing display control processing.

The image display apparatus includes a sensor 301, an angle detection unit 302, a control unit 303, a display unit 304, and a storage unit 305.

The sensor 301 is an angular acceleration sensor or an angular velocity sensor. The angular acceleration sensor detects an angular acceleration of the image display apparatus. The angular velocity sensor detects an angular velocity of the image display apparatus. In this embodiment, the apparatus may be provided with either of the sensors.

Note that the sensor 301 outputs detected information to the angle detection unit 302 at predetermined sampling time intervals.

The angle calculation section 302 inputs the detected information from the sensor 301, and calculates a current angle of the apparatus.

For example, when t(n) is used to denote a current time in a case where the sensor 301 is the angular velocity sensor, the current angle is calculated through integral calculation processing based on an elapsed time (tn - t(n-1)) with the application of the following sensor-detected information at two consecutive sampling times:

angular velocity information detected by the sensor 301 at a time t (n); and
angular velocity information detected by the sensor 301 at t(n-1), which is one sampling time before.
Alternatively, in a case where the sensor 301 is the angular acceleration sensor, an angular velocity is calculated through integral calculation processing based on an elapsed time, and further, the current angle is calculated again through integral calculation processing based on the elapsed time.

The angle calculation section 302 provides the control unit 303 with current angle information calculated on the basis of the detected information from the sensor 301.

The control unit 303 executes update of an image displayed on the display unit 304 on the basis of the current angle information input from the angle calculation section 302. Here, on condition that the current angle input from the angle calculation section 302 has been detected as having changed within the defined operating range, processing of updating data displayed on the display unit 304 is executed in accordance with the rotation angle within the operating range.

Further, upon determining that the processing described above with reference to Fig. 5, i.e., the rotation of the apparatus beyond the defined range from the upper limit to the lower limit, has occurred, the control unit 303 executes processing for rotating the coordinate system itself and changing the operating range.

The storage unit 305 stores therein parameters to be applied to display information and display control, which include, for example, angle information that defines the operating range, and the current angle information generated by the angle detection unit 302. The control unit 303 accesses as needed the storage unit 305 to execute update of an operating range, acquisition of data to be displayed, and the like.

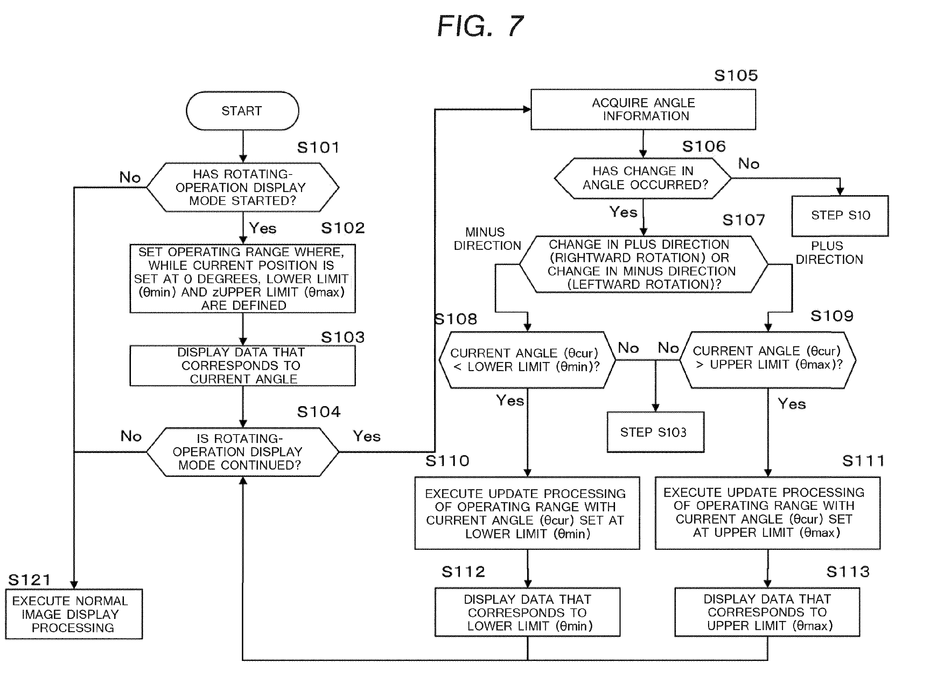

The sequence of processing for controlling an operating range, which is executed by the control unit 303, is explained with reference to a flowchart shown in Fig. 7.

First, the presence or absence of a request to start a rotating-operation display mode is determined in step S 101. This mode setting is executable through user input. The control unit 303 performs processing for setting the apparatus in the rotating-operation display mode in accordance with a user input, for example, via an input unit not shown in Fig. 6. When the apparatus is not set in the rotating-operation display mode, normal display processing is executed in step S121.

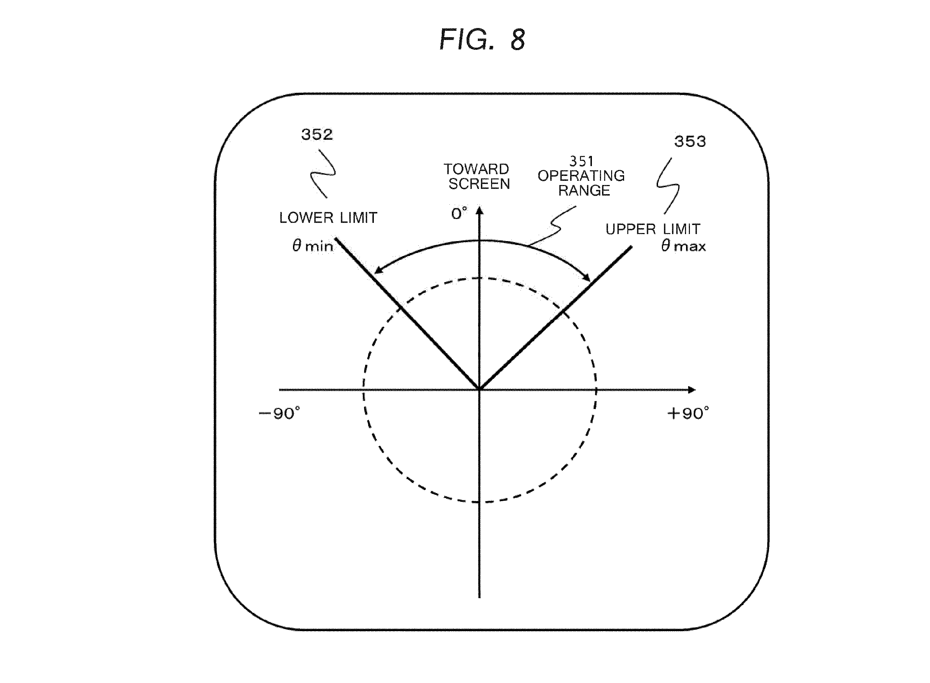

When a request to start the rotating-operation display mode is determined to be present in step S 101, an initial operating range is set in step S 102, for example, in such a manner as to have the current position of the apparatus at the center (0 degrees) and cover both sides of this position. This is, for example, an operating range 351 shown in Fig. 8. The operating range 351 is set up as a previously defined angular range. That is, this is a range from a lower limit ($\theta$min) 352 to an upper limit ($\theta$max) 353 shown in Fig. 8.

The control unit 303 sets up the operating range as a range from the lower limit ($\theta$min) to the upper limit ($\theta$max), for example, by setting:

an angular position at which the apparatus is located at the time of the request to start the rotating-operation display mode to 0 degrees;
the angle at the lower limit to $\theta$min; and

the angle at the upper limit to θmax.

Then, in step S103, the control unit 303 displays, on the display unit 304, data to be displayed that corresponds to the current angle. Initially, the current angle equals to 0 degrees, and data corresponding to 0 degrees is displayed. Specifically, a cursor is displayed in the central part of the display unit 304, for example, in the case of cursor control. Alternatively, processing for displaying the image 201b shown in the center of Fig. 4 is performed in the case of processing for displaying multi-view images explained with reference to Fig. 4.

Then, in step S 104, it is determined whether or not the rotating-operation display mode has been continued. When the rotating-operation display mode has not been continued, the sequence proceeds to step S121, and moves on to the normal display processing. When the rotating-operation display mode has been continued, the sequence proceeds to step S105, where the angle information is acquired. The angle information is input from the angle detection unit 302.

Then, in step S106, the control unit 303 determines whether or not any change in the angle has occurred. Note that the control unit 303 continuously inputs new angle information from the angle detection unit 302 at sampling time intervals of the sensor.

When it is determined in step S106 that any change in the angle has not occurred, the sequence proceeds to step S103, and the display of the data corresponding to the current angle is continued as it is.

When it is determined in step S106 that any change in the angle has occurred, the sequence proceeds to step S107. In step S107, it is determined whether the change in the angle is:

in the plus direction (rightward rotation); or
in the minus direction (leftward rotation).

When it is determined in step S 107 that the change in the angle is in the minus direction (leftward rotation), the sequence proceeds to step S108, whereas, when it is determined in step S107 that the change in the angle is in the plus direction (rightward rotation), the sequence proceeds to step S109.

When the change in the angle is in the minus direction (leftward rotation), comparison between the latest angle information (θcur) input from the angle detection unit 302 and the angle at the lower limit that defines a current operating range is executed in step S108. Initially, processing for comparison with the angle (θmin) at the lower limit of the operating range 351 shown in Fig. 8 is executed.

Note that, hereinafter, explanation is given with the latest angle information, input from the angle detection unit 302, being referred to as (θcur).

In step S108, it is determined whether or not:

$$\theta cur < \theta min \ \dots \ (\text{determination formula a})$$

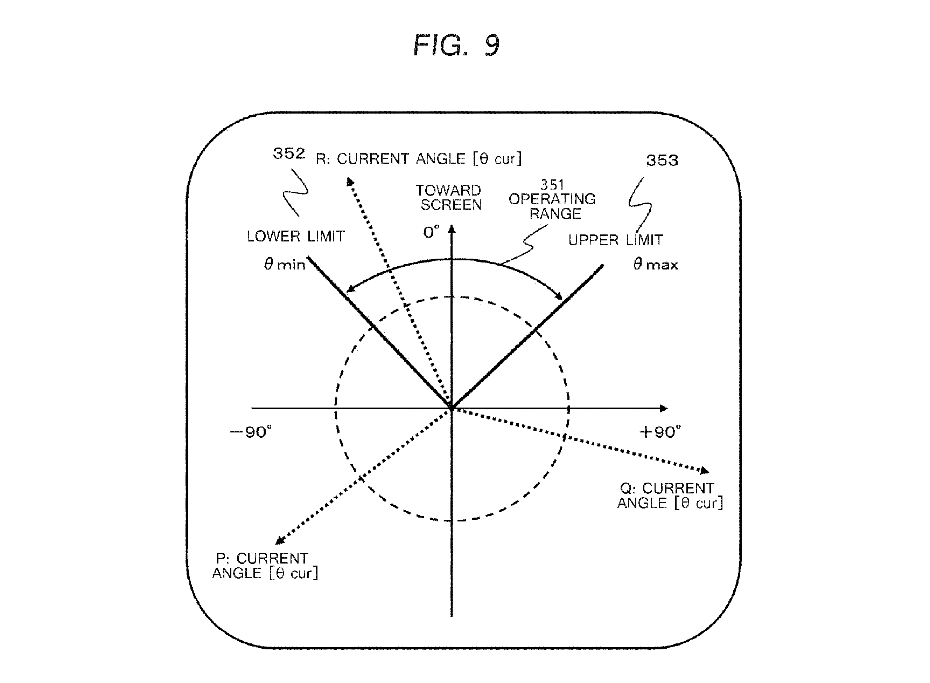

A case that satisfies the above (determination formula a) is when the current angle (θcur) has been set, for example, at a position of P shown in Fig. 9. That is when the current angle is outside a region of the operating range.

A case that does not satisfy the above (determination formula a) is when the current angle (θcur) has been set, for example, at a position R shown in Fig. 9. That is when the current angle is within the operating range.

In this case, the determination in step S108 results in No, and the sequence returns to step S103, where data corresponding to the current angle is displayed. Data corresponding to the angle is displayed within the operating range.

When the above (determination formula a) is satisfied, that is, when the current angle (θcur) has been set, for example, at the position of P shown in Fig. 9, the determination in step S108 results in Yes, and the sequence proceeds to step S110.

In step S110, the operating-range update processing where a new operating range having the current angle (θcur) set at the lower limit thereof is set up.

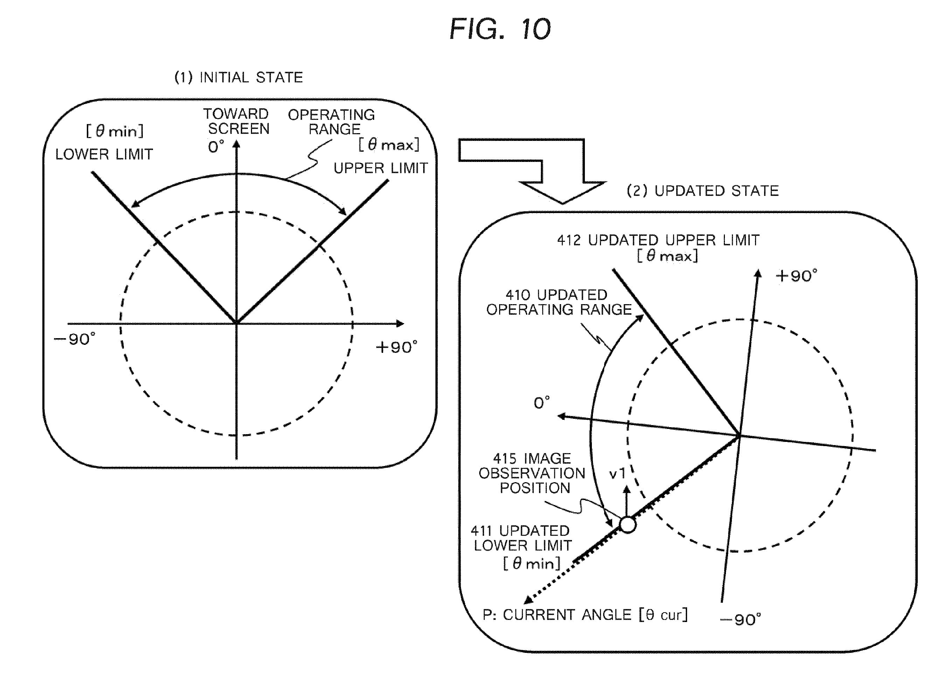

This processing is explained with reference to Fig. 10.

Fig. 10 shows examples of setting of coordinate systems and operating ranges in:

(1) the initial state; and
(2) an updated state.

First, (1) the initial state represents a coordinate system and an operating range as at the time when a rotating-operation mode is disclosed. Thereafter, the minus direction (leftward rotation) is executed through rotation of the apparatus by the user, and the current angle is set at the position of P shown in Fig. 9. A result of update of the coordinate system and the operating range that follows this corresponds to the update state of Fig. 10(2).

The lower limit ($\theta$min) having been set in (1) the initial state is, as the current angle ($\theta$cur) becomes not greater than the lower limit ($\theta$min), sequentially updated so that the following equation may be satisfied:

$$\text{the lower limit } (\theta\text{min}) = \text{the current angle } (\theta\text{cur}).$$

Along with this update processing, the upper limit and the operating range are also updated likewise. Note that the size of the operating range, i.e., the size of ($\theta$max) - ($\theta$min), is maintained constant.

As a result of such update processing, the coordinate system and the operating range are updated as shown in Fig. 10(2). That is, the position of P is set as an updated lower limit 411 of an updated operating range 410, and further, an updated upper limit 412 is set at a position obtained by adding the operating range to the updated lower limit 411.

Immediately after this update of the coordinate system and the operating range, data corresponding to the lower limit of the operating range is displayed (step S 112 in the flow of Fig. 7), for example, at an image observation position 415 in Fig. 10(2). Here, rotation of the apparatus in the plus direction (rightward) from the image observation position 415 results in execution of switching displayed data, as processing within the operating range.

Note that, in the flow shown in Fig. 7, this processing for switching displayed data is performed in accordance with the following processing in order:

step S112, step S104, step S105, and step S106; and
thereafter, step S107, step S108, and step S103, or step S107, step S109, and step S103.

Note that, for example, in a case where processing that accompanies rotation of the apparatus is cursor movement, rotation of the apparatus in the plus direction (rightward) from the image observation position 415 in Fig. 10(2) enables processing of starting cursor movement in a direction reverse to a direction of cursor movement corresponding to the lower limit of the operating range.

Next, processing in a case when the change in the angle is determined in step S 107 to be in the plus direction (rightward rotation) is described.

The sequence proceeds to step S109 when the change in the angle is determined, in step S 107, to be in the plus direction (rightward rotation). The control unit 303 executes comparison between the latest angle information ($\theta$cur) input from the angle detection unit 302 and the angle at the upper limit that defines a current operating range in step S109. Initially, processing for comparison with the angle ($\theta$mmax) at the upper limit of the operating range 351 shown in Fig. 8 is executed.

In step S109, it is determined whether or not:

$$\theta\text{max} < \theta\text{cur} \dots \text{(determination formula b)}$$

A case that satisfies the above (determination formula b) is when the current angle ($\theta$cur) has been set, for example, at the position of Q shown in Fig. 9. That is when the current angle is outside a region of the operating range.

A case that does not satisfy the above (determination formula b) is when the current angle ($\theta$cur) has been set, for example, at the position of R shown in Fig. 9. That is when the current angle is within the operating range.

In this case, the determination in step S109 results in No, and the sequence returns to step S103, where data corresponding to the current angle is displayed. Data corresponding to the angle is displayed within the operating range.

When the above (determination formula b) is satisfied, that is, when the current angle ($\theta$cur) has been set, for example, at the position of Q shown in Fig. 9, the determination in step S109 results in Yes, and the sequence proceeds to step S111.

In step S111, the operating-range update processing where a new operating range having the current angle ($\theta$cur) set at the upper limit thereof is set up.

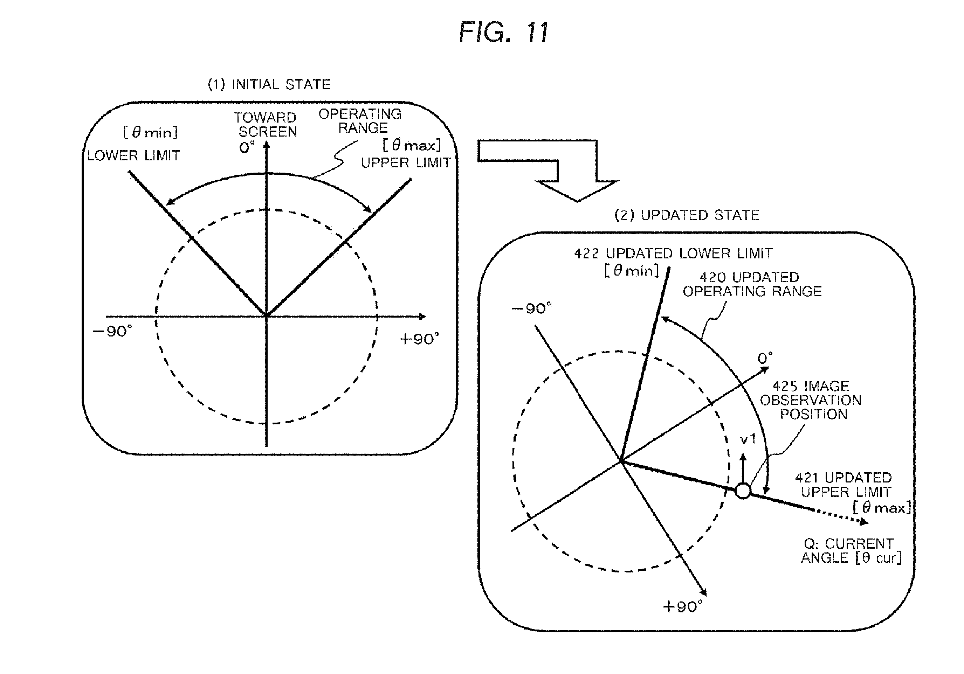

This processing is explained with reference to Fig. 11.

Fig. 11 shows examples of setting of coordinate systems and operating ranges in:

(1) the initial state; and
(2) an updated state.

First, (1) the initial state represents a coordinate system and an operating range as at the time when the rotating-operation mode is disclosed. Thereafter, the minus direction (leftward rotation) is executed through rotation of the apparatus by the user, and the current angle is set at the position of Q shown in Fig. 9. A result of update of the coordinate system and the operating range that follows this corresponds to the update state of Fig. 11(2).

The upper limit ($\theta$max) having been set in (1) the initial state is, as the current angle ($\theta$cur) becomes not smaller than the upper limit ($\theta$max), sequentially updated so that the following equation may be satisfied:

$$\text{the upper limit } (\theta\text{max}) = \text{the current angle } (\theta\text{cur}).$$

Along with this update processing, the lower limit and the operating range are also updated likewise. Note that the size of the operating range, i.e., the size of ($\theta$max) - ($\theta$min), is maintained constant.

As a result of such update processing, the coordinate system and the operating range are updated as shown in Fig. 11(2). That is, the position of Q is set as an updated upper limit 421 of an updated operating range 420, and further, an updated lower limit 422 is set at a position obtained by subtracting the operating range from the updated upper limit 421.

Immediately after this update of the coordinate system and the operating range, data corresponding to the upper limit of the operating range is displayed (step S 113 in the flow of Fig. 7), for example, at an image observation position 425 in Fig. 11 (2). Here, rotation of the apparatus in the minus direction (leftward) from the image observation position 425 results in execution of switching displayed data, as processing within the operating range.

In the flow shown in Fig. 7, this processing for switching displayed data is performed in accordance with the following processing in order:

step S 113, step S104, step S105, and step S106; and
thereafter, step S107, step S108, and step S103, or step S107, step S109, and step S103.

As described above, the image display apparatus of the present invention has a configuration that performs update processing where, so that the current angle may constantly be set within the operating range in accordance with the current angle, the operating range is shifted in a manner following the current angle.

When the apparatus is rotated rightward or leftward, or, when the apparatus is rotated at least in any one direction, such processing causes update of a displayed image to occur. That is, such processing makes it possible to prevent a situation where the image is not updated even when the apparatus has been rotated in either direction.

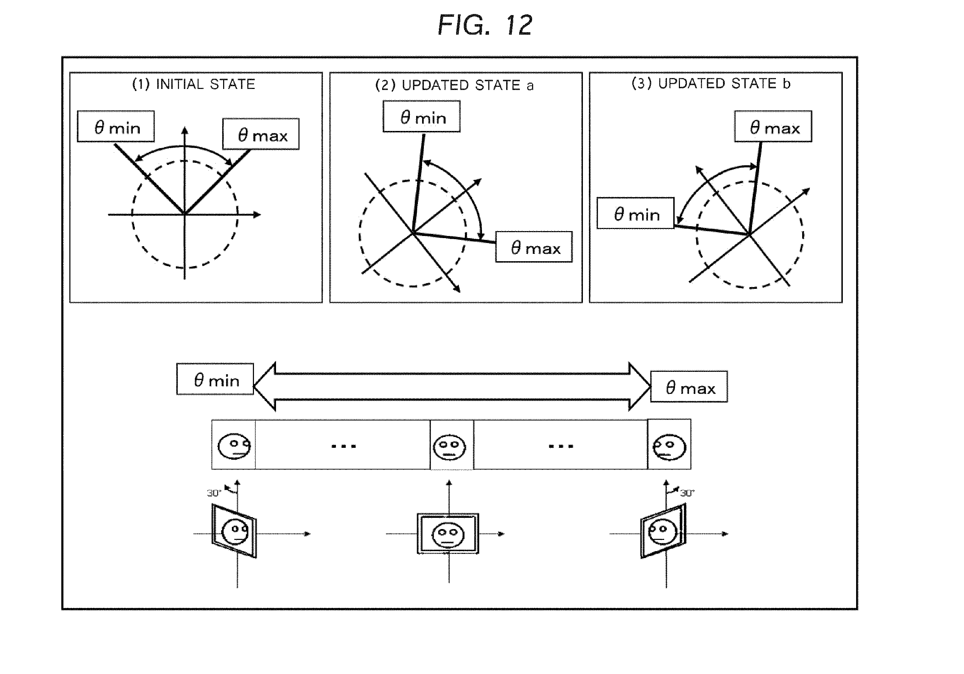

For example, as shown in Fig. 12, the operating range is set, so as to include the current angle in any one of:

(1) the initial state;
(2) an updated state a; and
(3) an updated state b.

Consequently, for example, as long as display of the multi-view images shown in Fig. 12 is being executed, it becomes possible to detect, through leftward or rightward rotation of the apparatus, a change in the angle in at least one direction, between the lower limit ($\theta$min) and the upper limit ($\theta$max) of an operating range that has been set at that point of time, and to execute image update in accordance with the change in angle.

For example, when processing for displaying the multi-view images shown in Fig. 12 is performed, rotation of the apparatus by 1 degree within an operating range causes processing of switching display to an image next to a currently displayed image, in a case where: the multi-view images include images, the total number of which is 60; and an angle corresponding to the operating range, i.e., an angle formed between the lower limit ($\theta$min) and the upper limit ($\theta$max), is 60 degrees.

A conventional apparatus having an unchangeable operating range does not execute switching of display when the apparatus has not been set at an angle corresponding to the operating range. Whereas, the apparatus of the present invention allows the apparatus to be constantly set within an operating range regardless of an angle by which the apparatus is rotated.

Thus, the apparatus of the present invention allows, for example, when the user performs processing of greatly swinging the apparatus leftward and rightward, switching of display of images to reliably occur within a range over which the apparatus has been swung. Consequently, the user is enabled to, at the same time as watching a display screen, readily perform processing such as displaying an image photographed at a favored position, that is, for example, 0 degrees.

Note that, as described above, this processing for updating an operating range is applicable not only to the processing for updating multi-view images but also to control of processing such as cursor movement. Further, this processing is applicable also to processing for switching images of usual images other than multi-view images, processing for switching angles of multi-angle images, processing for switching display positions of panoramic images, processing for switching display positions of BIC images, and the like.

Additionally, although the above-described embodiment explains an example where the rotation is in a direction around one axis, which is either leftward or rightward, the present invention is applicable not only to leftward or rightward rotation but also to processing for upward or downward rotation. Further, display processing, where an operating range that allows display on the display unit of the apparatus is maintained to be constantly updated whenever the apparatus is rotated and moved in any three-dimensional direction is secured, is made possible by installing sensors that detect both of the leftward or rightward rotation and the upward or downward rotation, and executing the same update of an operating range as above with the application of information detected by the respective sensors.

Note that, although the above-described embodiment explains an example using the angular acceleration sensor or the angular velocity sensor as the sensor in the configuration shown in Fig. 6, the configuration may employ an angle sensor. In a case where an angle sensor is used, processing where information detected by the angle sensor is output directly to the control unit is enabled, whereby the angle detection unit is omissible.
Additionally, although the angle detection unit and the control unit are illustrated separately in the configuration shown in Fig. 4, it is possible to configure the control unit to execute processing that the angle detection unit is intended to execute, in which case the configuration of the angle detection unit is also omissible.

Hereinabove, the present invention has been explained in detail with reference to a particular embodiment. However, it is obvious that those skilled in the art can make modifications and substitutions to the embodiment without departing from the scope of the present invention. That is, the present invention is disclosed in the form of exemplification, and should not be understood as being limited thereto. The scope of claims should be taken into consideration to determine the essence of the present invention.

Additionally, a series of processing explained in the description can be executed by use of hardware, software or a configuration combining hardware and software. In a case where processing using software is executed, it is possible to cause a program to be executed after being installed in a memory in a computer incorporated in dedicated hardware, or to cause the program to be executed in a general-purpose computer capable of executing various kinds of processing, the program having a processing sequence recorded therein. For example, it is possible to have the program previously recorded in a recording medium. It is possible to install the program in a computer from the recording medium, or alternatively, to receive the program via a network, such as the Internet or a LAN (Local Area Network), and install the program in a recording medium such as a built-in hard disk.

Note that various kinds of processing described in the description may be executed in chronological order as described, or alternatively, be executed in parallel or independently in accordance with the processing capacity of the apparatus that executes the processing or as needed. Additionally, in this description, a system refers to a configuration obtained as a logical set of two or more apparatuses, and is not limited to one in which the apparatuses in each configuration are contained in the same chassis.

INDUSTRIAL APPLICABILITY

As explained above, according to the configuration of one embodiment of the present invention, there are provided an apparatus and a method that, in a configuration where a rotational movement of the apparatus causes switching of displayed data, effectively control display even when the apparatus has gone beyond a defined operating range. In a configuration where update processing of displayed data is executed on the basis of rotation angle information, detected by a sensor, of the apparatus, when the apparatus has rotated beyond an operating range already set up for the apparatus, a control unit changes the operating range. Specifically, an operating range is sequentially updated so that a current angle of an image display apparatus may be constantly set within the operating range. This processing for updating the operating range makes it possible to have the apparatus constantly set within an effective operating range, prevent occurrence of a problem that displayed data is set unchangeable because of the position of the apparatus, and constantly update displayed data.

REFERENCE SIGNS LIST

100    Image pickup apparatus
101    Lens
102    Shutter
103    Display unit
301    Sensor
302    Angle detection unit
303    Control nit

304     Display unit
305     Storage unit

**Claims**

1.  An image display apparatus comprising:

    a sensor for detecting a rotation angle of the image display apparatus or information used for calculating the rotation angle;
    a control unit for executing update processing on displayed data on the basis of a current angle of the image display apparatus, the current angle being calculated on the basis of information input from the sensor; and
    a display unit for displaying displayed data that accords with the update processing executed by the control unit, wherein the control unit:

       is configured to, when an image processing apparatus is in a predetermined operating range, execute the update processing on the displayed data on the display unit in accordance with the rotation angle within the operating range; and,
       when the image display apparatus has rotated beyond an already set-up operating range, changes the operating range along with the rotation, and performs operating-range update processing in which the current angle of the image display apparatus is set to within an updated operating range.

2.  The image display apparatus according to claim 1, wherein the control unit:

    executes, when the current angle of the image display apparatus has shifted in a direction that brings the current angle beyond the upper limit of the already set-up operating range, the operating-range update processing in a manner that the current angle is set as the upper limit of an operating range; and
    executes, when the current angle of the image display apparatus has shifted in a direction that brings the current angle beyond the lower limit of the already set-up operating range, the operating-range update processing in a manner that the current angle is set as the lower limit of the operating range.

3.  The image display apparatus according to claim 1 or 2, wherein:

    the sensor is an angular velocity sensor or an angular acceleration sensor; and
    the control unit calculates the current angle of the image display apparatus on the basis of sensor-detected information from the angular velocity sensor or the angular acceleration sensor or inputs a calculated value.

4.  The image display apparatus according to claim 3, further comprising an angle detection unit for calculating the current angle of the image display apparatus by executing integration calculation processing on values output from the angular velocity sensor or the angular acceleration sensor, and outputting the current angle to the control unit.

5.  The image display apparatus according to any one of claims 1 to 4, wherein the control unit executes, on the basis of the current angle of the image display apparatus, processing for switching multi-view images to be displayed on the display unit.

6.  An image display control method to be executed by an image display apparatus, comprising:

    an apparatus position detection step in which a sensor detects a rotation angle of the image display apparatus or information used for calculating the rotation angle;
    a display update step in which a control unit executes update processing on displayed data on a display unit on the basis of a current angle of the image display apparatus, the current angle being calculated on the basis of information input from the sensor, and in which the update processing on the displayed data is executed when the image display apparatus is detected as having rotated within a predetermined operating range;
    a display step in which the display unit displays displayed data that accords with the update processing by the control unit; and
    an operating-range update step in which, when the image display apparatus has rotated beyond an already set-up operating range, the control unit changes the operating range along with the rotation, and performs operating-range update processing in which the current angle of the image display apparatus is set within the operating range.

7. A program for causing an image display apparatus to execute image display control, the program being configured to execute:

an apparatus position detection step of causing a sensor to detect a rotation angle of the image display apparatus or information used for calculating the rotation angle;

a display update step of causing a control unit to execute update processing on displayed data on a display unit on the basis of a current angle of the image display apparatus, the current angle being calculated on the basis of information input from the sensor, and in which the update processing on the displayed data is executed when the image display apparatus is detected as having rotated within a predetermined operating range;

a display step of causing the display unit to display displayed data that accords with the update processing by the control unit; and

an operating-range update step in which, when the image display apparatus has rotated beyond an already set-up operating range, the control unit changes the operating range along with the rotation and sets the current angle of the image display apparatus within the operating range.

## FIG. 1

TOWARD
SCREEN

OPERATING
RANGE

LOWER
LIMIT

0°

UPPER
LIMIT

−90°

+90°

OUTSIDE OF
OPERATING RANGE

10 OBSERVATION ANGLE

EP 2 549 470 A1

FIG. 2

100

102

103

(b) REAR

101

102

(a) FRONT

FIG. 3

# FIG. 4

EP 2 549 470 A1

FIG. 5

EP 2 549 470 A1

## FIG. 6

| 301 | 302 | 303 | 304 |
|---|---|---|---|
| SENSOR (ANGULAR ACCELERATION SENSOR) (ANGULAR VELOCITY SENSOR) | ANGLE DETECTION UNIT | CONTROL UNIT | DISPLAY UNIT |

305

STORAGE UNIT

EP 2 549 470 A1

**FIG. 7**

START

S101 — HAS ROTATING-OPERATION DISPLAY MODE STARTED?

No → S121 — EXECUTE NORMAL IMAGE DISPLAY PROCESSING

Yes → S102 — SET OPERATING RANGE WHERE, WHILE CURRENT POSITION IS SET AT 0 DEGREES, LOWER LIMIT ($\theta$min) AND UPPER LIMIT ($\theta$max) ARE DEFINED

S103 — DISPLAY DATA THAT CORRESPONDS TO CURRENT ANGLE

S104 — IS ROTATING-OPERATION DISPLAY MODE CONTINUED?

No → S121 — EXECUTE NORMAL IMAGE DISPLAY PROCESSING

Yes → S105 — ACQUIRE ANGLE INFORMATION

S106 — HAS CHANGE IN ANGLE OCCURRED?

No → STEP S10

Yes → S107 — CHANGE IN PLUS DIRECTION (RIGHTWARD ROTATION) OR CHANGE IN MINUS DIRECTION (LEFTWARD ROTATION)?

PLUS DIRECTION → S109 — CURRENT ANGLE ($\theta$cur) > UPPER LIMIT ($\theta$max)?

Yes → S111 — EXECUTE UPDATE PROCESSING OF OPERATING RANGE WITH CURRENT ANGLE ($\theta$cur) SET AT UPPER LIMIT ($\theta$max)

S113 — DISPLAY DATA THAT CORRESPONDS TO UPPER LIMIT ($\theta$max)

No → STEP S103

MINUS DIRECTION → S108 — CURRENT ANGLE ($\theta$cur) < LOWER LIMIT ($\theta$min)?

Yes → S110 — EXECUTE UPDATE PROCESSING OF OPERATING RANGE WITH CURRENT ANGLE ($\theta$cur) SET AT LOWER LIMIT ($\theta$min)

S112 — DISPLAY DATA THAT CORRESPONDS TO LOWER LIMIT ($\theta$min)

No → STEP S103

# FIG. 8

EP 2 549 470 A1

FIG. 9

# FIG. 10

(1) INITIAL STATE

[θmin]
LOWER LIMIT

TOWARD SCREEN
0°

OPERATING RANGE

[θmax]
UPPER LIMIT

−90°

+90°

(2) UPDATED STATE

412 UPDATED UPPER LIMIT
[θmax]

410 UPDATED OPERATING RANGE

+90°

0°

415 IMAGE OBSERVATION POSITION

v1

411 UPDATED LOWER LIMIT
[θmin]

P: CURRENT ANGLE [θcur]

−90°

EP 2 549 470 A1

# FIG. 11

(1) INITIAL STATE

[θ min]
LOWER LIMIT

TOWARD SCREEN
0°

OPERATING RANGE

[θ max]
UPPER LIMIT

−90°

+90°

(2) UPDATED STATE

422 UPDATED LOWER LIMIT
[θ min]

420 UPDATED OPERATING RANGE

−90°

0°

425 IMAGE OBSERVATION POSITION

v1

421 UPDATED UPPER LIMIT
[θ max]

+90°

Q: CURRENT ANGLE [θ cur]

EP 2 549 470 A1

# FIG. 12

(1) INITIAL STATE

θ min    θ max

(2) UPDATED STATE a

θ min    θ max

(3) UPDATED STATE b

θ max    θ min

θ min    θ max

## INTERNATIONAL SEARCH REPORT

| International application No. |
| --- |
| PCT/JP2011/055338 |

**A. CLASSIFICATION OF SUBJECT MATTER**
*G09G5/00*(2006.01)i, *G06F3/048*(2006.01)i

According to International Patent Classification (IPC) or to both national classification and IPC

**B. FIELDS SEARCHED**

Minimum documentation searched (classification system followed by classification symbols)
G09G5/00, G06F3/048

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-96800 A (Matsushita Electric Industrial Co., Ltd.), 24 April 2008 (24.04.2008), entire text; all drawings (Family: none) | 1-7 |
| A | JP 2006-53427 A (NEC Access Technica, Ltd.), 23 February 2006 (23.02.2006), paragraphs [0029] to [0040]; fig. 1 to 5 (Family: none) | 1-7 |
| A | JP 2005-175639 A (Sony Ericsson Mobile Communications Japan, Inc.), 30 June 2005 (30.06.2005), claims (Family: none) | 1-7 |

[X] Further documents are listed in the continuation of Box C.　　[ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 02 June, 2011 (02.06.11) | Date of mailing of the international search report 14 June, 2011 (14.06.11) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/055338 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-325943 A  (Olympus Corp.),<br>18 November 2004 (18.11.2004),<br>paragraphs [0038] to [0066]; fig. 1 to 4<br>(Family: none) | 1-7 |
| P,A | JP 2010-72477 A  (Toshiba Tec Corp.),<br>02 April 2010 (02.04.2010),<br>paragraphs [0033] to [0059]; fig. 5 to 11<br>(Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3234633 B